# EUROPEAN PATENT APPLICATION

(11) **EP 4 295 947 A1**
(43) Date of publication of application: **27.12.2023**
(21) Application number: 22755852.5
(22) Date of filing: 25.01.2022
(51) Int. Cl.: B01J 35/04, B01D 53/94, B01J 23/63, F01N 3/022, F01N 3/035, F01N 3/24, F01N 3/28

(54) **EXHAUST GAS PURIFICATION CATALYST**

(30) Priority: 16.02.2021 JP 2021022649
(71) Applicant: CATALER CORPORATION, Kakegawa-shi, Shizuoka 437-1492 (JP)
(72) Inventor: TASAKI, Ryo, Kakegawa-shi, Shizuoka 437-1492 (JP); ONOE, Ryota, Kakegawa-shi, Shizuoka 437-1492 (JP); IWAI, Momoko, Kakegawa-shi, Shizuoka 437-1492 (JP); MATSUSHITA, Yamato, Kakegawa-shi, Shizuoka 437-1492 (JP)
(74) Representative: Gramm, Lins & Partner Patent- und Rechtsanwälte PartGmbB
(86) International application number: PCT/JP2022/002681
(87) International publication number: WO 2022/176528

(57) **Abstract**

A wall-flow exhaust gas-purifying catalyst in which a pressure loss caused by accumulation of PM is small is provided. An exhaust gas-purifying catalyst (1) of the present invention includes a catalyst-coated filter (2). The catalyst-coated filter (2) includes a filter substrate (21) and a catalyst layer (22) on a pore wall of the filter substrate (21). The exhaust gas-purifying catalyst (1) has a first end, a second end, a porous wall (W), a first cell, and a second cell. The first cell is closed at the second end, the second cell is closed at the first end, and the first cell and the second cell are adjacent to each other with the porous wall (W) interposed therebetween. At a surface of the porous wall (W) on the first cell side, a proportion S_{S}/S of a total area Ss of pores having an opening diameter of less than 40 um in a total area S of all pores is 65% or more.

## Description

### FIELD

The present invention relates to an exhaust gas-purifying catalyst.

### BACKGROUND

Exhaust gas emitted by an internal-combustion engine contains harmful substances such as hydrocarbons (HC), carbon monoxide (CO), and nitrogen oxides (NOₓ). For purification of such exhaust gas, for example, a straight-flow exhaust gas-purifying catalyst including a platinum group metal as a catalytic metal is used.

Exhaust gas emitted by a diesel engine contains particulate matter (PM) at a relatively high concentration, in addition to the above harmful substances. Thus, to purify the exhaust gas emitted by a diesel engine, a diesel particulate filter (DPF) is also used so as to remove the PM from the exhaust gas.

In recent years, there has been more restriction on PM emission, giving rise to a need for removal of PM not only from the exhaust gas emitted by a diesel engine but also from the exhaust gas emitted by a gasoline engine. Therefore, a gasoline particulate filter (GPF) is being used to purify the exhaust gas emitted by a gasoline engine.

As an example of these particulate filters, there is a wall-flow exhaust gas-purifying catalyst in which a supported catalyst is supported on a wall of the filter. Using such an exhaust gas-purifying catalyst allows for reduction of the space for installing an exhaust gas-purifying system or reduction of the costs of an exhaust gas-purifying system.

For example, Patent Document 1 describes a wall-flow exhaust gas-purifying catalyst. Patent Document 1 describes accumulating, for example, a powder made of a metal oxide only in the pores of the porous wall as a filter wall of the wall-flow exhaust gas-purifying catalyst, and filling up to 50% of the total pore volume with the powder.

### Citation List

### Patent Literature

Patent Literature 1: WO2019/197177

### SUMMARY

### TECHNICAL PROBLEM

An object of the present invention is to provide a wall-flow exhaust gas-purifying catalyst in which a pressure loss caused by accumulation of particulate matter is small.

### SOLUTION TO PROBLEM

According to an aspect of the present invention, there is provided an exhaust gas-purifying catalyst comprising a catalyst-coated filter, the catalyst-coated filter comprising a filter substrate and a catalyst layer on a pore wall of the filter substrate, wherein the exhaust gas-purifying catalyst has a first end, a second end, a porous wall, a first cell, and a second cell, the first cell extending from the first end toward the second end, being opened at the first end, and being closed at the second end, the second cell extending from the second end toward the first end, being opened at the second end, and being closed at the first end, and the first cell and the second cell being adjacent to each other with the porous wall interposed therebetween; and the porous wall has a proportion S_{S}/S of 65% or more at a surface on the first cell side, the proportion S_{S}/S being a proportion of a total area S_{S} of pores having an opening diameter of less than 40 µm at the surface in a total area S of all pores at the surface.

Herein, the "opening diameter" is a value obtained by the method described below.

First, an image of the surface of the porous wall on the first cell side is captured at 200-fold magnification to obtain a gray-scale image. An optical microscope is used to capture the image. The imaging of the first cell-side surface of the porous wall is performed on a region thereof near the center in the longitudinal direction of the catalyst-coated filter. The "longitudinal direction" is equal to the longitudinal directions of the first and second cells. Next, the obtained gray-scale image is binarized to obtain a binarized image. Then, an area of each of the black parts on the first cell-side surface in the binarized image is obtained, and a diameter of a circle having an area equal to the area of each of the black parts, that is, an equivalent circle diameter, is determined as the "opening diameter" of the pores corresponding to the black parts. Herein, as long as a black part is spaced apart from the other black parts, the black part corresponds to a single pore whatever shape it has. The image processing software "ImageJ" can be used for the image processing.

The exhaust gas-purifying catalyst is a particulate filter including a catalyst layer. More specifically, the exhaust gas-purifying catalyst is a wall-flow exhaust gas-purifying catalyst that allows exhaust gas to sequentially pass through the first cell, the pores of the porous wall, and the second cell, during which PM in the exhaust gas is collected by the porous wall.

In general, the wall-flow exhaust gas-purifying catalyst is used to remove PM from the exhaust gas emitted by internal-combustion engines such as a gasoline engine and a diesel engine. For example, the wall-flow exhaust gas-purifying catalyst is used in automotive vehicles that include a gasoline engine or a diesel engine as at least a part of the power source.

In the wall-flow exhaust gas-purifying catalyst, the catalyst layer is provided to promote burning of the PM collected by the porous wall.

For example, in a gasoline-fueled automobile that uses power generated in its gasoline engine as driving power and is equipped with the wall-flow exhaust gas-purifying catalyst, the catalyst layer promotes burning of the collected PM, especially in a period of a high-load operation, such as running in a rural or on a highway, during which the gasoline engine emits a high-temperature exhaust gas.

The temperature of the exhaust gas emitted by a diesel engine is lower than the temperature of the exhaust gas emitted by a gasoline engine. Thus, in a diesel automobile that uses power generated in its diesel engine as driving power and is equipped with the wall-flow exhaust gas-purifying catalyst, the temperature of the exhaust gas is raised by injecting fuel into the exhaust gas to burn the collected PM. The catalyst layer promotes the burning, thus contributing to reduction of the amount of the fuel injected into the exhaust gas.

Although the catalyst layer may promote the burning of PM as described above, the burning of PM is not always sufficiently promoted by the catalyst layer. For example, if a gasoline-fueled automobile equipped with the wall-flow exhaust gas-purifying catalyst travels a short distance in stop-and-go traffic, the amount of PM collected exceeds the amount of PM burned, resulting in accumulation of PM in the wall-flow exhaust gas-purifying catalyst. Also, in a diesel automobile equipped with the wall-flow exhaust gas-purifying catalyst, PM is accumulated in the wall-flow exhaust gas-purifying catalyst in a period prior to injection of fuel into the exhaust gas.

When PM is accumulated, the pressure loss caused in the wall-flow exhaust gas-purifying catalyst increases. When the pressure loss increases, the fuel efficiency performance decreases. Therefore, it is desirable to keep the increase in the pressure loss caused by accumulation of PM small.

In a general wall-flow exhaust gas-purifying catalyst, the above-described proportion Ss/S is far below 65%. In such an exhaust gas-purifying catalyst, PM is accumulated in the pores positioned within the first cell-side surface region of the porous wall, that is, the pores whose distances from the first cell-side surface of the porous wall are, for example, 30% or less of the thickness of the porous wall in the initial phase of PM accumulation, and the amount of PM accumulated in these pores increases. When the amount of PM accumulated in these pores increases, a gas passage is narrowed or closed in the porous wall, resulting in a significant increase in the pressure loss. Therefore, in the initial phase of PM accumulation, the pressure loss increases drastically due to an increase in the amount of PM collected.

When the accumulation of PM in the pores positioned within the above surface region has progressed to a certain extent, PM will be accumulated on the first cell-side surface of the porous wall. An accumulation layer formed of the PM accumulated on the first cell-side surface of the porous wall is a particulate layer having a low apparent density. In this particulate layer, narrowing or closure of a gas passage due to an increase in the amount of PM accumulated is less likely to occur. Thus, in this period, the increase in pressure loss due to an increase in the amount of PM collected is mild.

As described above, in a general wall-flow exhaust gas-purifying catalyst, the pressure loss increases rapidly and drastically in the initial phase of PM accumulation. Therefore, in an automobile equipped with such an exhaust gas-purifying catalyst, a proportion of a period in which the pressure loss is large in a period from the time when PM starts to accumulate to the time when the PM is burned so that the amount of the accumulation is sufficiently reduced is high.

In contrast, in the exhaust gas-purifying catalyst configured so that the proportion Ss/S of the total area S_{S} of the pores having an opening diameter of less than 40 um at the surface the porous wall on the first cell side in the total area S of all pores on the surface is 65% or more, PM is less likely to reach the pores positioned far away from the first cell-side surface of the porous wall. Therefore, the amount of PM accumulated in the pores of the porous wall is small, and narrowing or closure of a gas passage in the porous wall is less likely to occur. Accordingly, the pressure loss of said exhaust gas-purifying catalyst caused by accumulation of PM is small.

The proportion Ss/S is preferably 70% or more. The proportion Ss/S has no upper limit; however, it is, for example, 95% or less.

According to another aspect of the present invention, there is provided an exhaust gas-purifying catalyst according to the above aspect, wherein the porous wall has a proportion S_{M}/S of 30% or less at the surface, the proportion S_{M}/S being a proportion of a total area S_{M} of pores having an opening diameter of 40 um or more and less than 60 µm at the surface in the total area S of all the pores.

When the proportion Ss/S increases, the proportion S_{M}/S tends to become smaller. The proportion S_{M}/S is preferably 20% or less. The proportion S_{M}/S has no lower limit; however, it is, for example, 4% or more.

According to still another aspect of the present invention, there is provided the exhaust gas-purifying catalyst according to any one of the above aspects, wherein the porous wall has a proportion S_{L}/S of 15% or less at the surface, the proportion S_{L}/S being a proportion of a total area S_{L} of pores having an opening diameter of 60 µm or more at the surface in the total area S of all the pores.

When the proportion Ss/S increases, the proportion S_{L}/S tends to become smaller. The proportion S_{L}/S is preferably 10% or less. The proportion S_{L}/S has no lower limit; however, it is, for example, 1% or more.

According to still another aspect of the present invention, there is provided the exhaust gas-purifying catalyst according to any one of the above aspects, wherein the porous wall has a proportion S_{SS}/S of 50% or less at the surface, the proportion Sss/S being a proportion of a total area S_{SS} of pores having an opening diameter of less than 20 µm at the surface in the total area S of all the pores.

An exhaust gas-purifying catalyst with a large proportion Sss/S tends to have a large pressure loss in a state where PM is not accumulated, as compared to an exhaust gas-purifying catalyst with a small proportion Sss/S. The proportion Sss/S has no lower limit; however, it is, for example, 20% or more.

According to still another aspect of the present invention, there is provided the exhaust gas-purifying catalyst according to any one of the above aspects, wherein the filter substrate includes a honeycomb structure and plugs.

The honeycomb structure is a column with a pair of opposing bases and is provided with through-holes extending from one of the bases to the other of the bases. One of the bases corresponds to the first end, and the other of the bases corresponds to the second end. The shape of the pair of opposing bases is, for example, a circular, elliptical, oval, or polygonal shape.

The honeycomb structure includes walls forming sidewalls of the through-holes. The walls are porous and separate the adjacent through-holes.

As a material of the honeycomb structure, for example, ceramics such as cordierite, aluminum titanate, and silicon carbide can be used. A nonwoven fabric made of metal or an alloy may be laid in such a honeycomb structure. Alternatively, metal or an alloy such as stainless steel may be used as a material of the honeycomb structure.

Each plug closes the through-holes of the honeycomb structure on one end side. Half of the through-holes are blocked by the plugs on the second end side. The first cell is a space surrounded by the plug blocking the through-hole on the second end side and the wall forming the sidewall of the through-hole.

The remaining through-holes of the honeycomb structure, which are not closed on the second end side, are blocked by the plugs on the first end side. The second cell is a space surrounded by the plug blocking the through-hole on the first end side and the wall forming the sidewall of the hole.

The first cell and the second cell are adjacent to each other in such a manner that the wall of the filter substrate and the catalyst layer formed in the pores of the wall are interposed between the first cell and the second cell.

As a material of the plugs, for example, ceramics such as cordierite, aluminum titanate, and silicon carbide can be used.

According to still another aspect of the present invention, there is provided the exhaust gas-purifying catalyst according to any one of the above aspects, wherein the filter substrate has a volume V in a range of 0.1 L to 5 L. Herein, the "volume" of the filter substrate is a volume including the space of the filter substrate corresponding to the first and second cells and the walls of the filter substrate, and is calculated by multiplying the area of the base of the filter substrate by the height of the filter substrate. The volume V of the filter substrate is preferably 0.5 L or more. The volume V of the filter substrate is preferably 3 L or less, and more preferably 2 L or less.

According to still another aspect of the present invention, there is provided the exhaust gas-purifying catalyst according to any one of the above aspects, wherein a dimension of the filter substrate in a longitudinal direction of the first cell and the second cell is in a range of 10 mm to 500 mm. The dimension is preferably in a range of 50 mm to 300 mm.

According to still another aspect of the present invention, there is provided the exhaust gas-purifying catalyst according to any one of the above aspects, wherein a thickness of a portion of the filter substrate corresponding to the porous wall, that is, a thickness of the wall of the filter substrate is in a range of 0.05 mm to 2 mm. If the thickness is reduced, the mechanical strength of the filter substrate decreases. If the thickness is increased, the porous wall becomes thick, resulting in a large pressure loss in a state where PM is not accumulated. The thickness is preferably in a range of 0.1 mm to 1 mm.

According to still another aspect of the present invention, there is provided the exhaust gas-purifying catalyst according to any one of the above aspects, wherein a porosity of a portion of the filter substrate corresponding to the porous wall, that is, a porosity of the wall of the filter substrate is in a range of 30% to 90%. The "porosity" is a value obtained by a mercury intrusion method. If the porosity is increased, the mechanical strength of the filter substrate decreases. If the porosity is reduced, the porosity of the porous wall is also reduced, resulting in a large pressure loss in a state where PM is not accumulated. The porosity is preferably in a range of 40% to 80%.

According to still another aspect of the present invention, there is provided the exhaust gas-purifying catalyst according to any one of the above aspects, wherein an average pore diameter of a portion of the filter substrate corresponding to the porous wall, that is, an average pore diameter of the wall of the filter substrate, is in a range of 5 um to 50 um. The "average pore diameter" is a value obtained by a mercury intrusion method. If the average pore diameter is increased, the mechanical strength of the filter substrate decreases. If the average pore diameter is reduced, the pressure loss in a state where PM is not accumulated is increased. The average pore diameter is preferably in a range of 10 µm to 40 µm.

According to still another aspect of the present invention, there is provided the exhaust gas-purifying catalyst according to any one of the above aspects, wherein the catalyst layer includes precious metal. Precious metals are examples of the catalytic metal. Precious metals are, for example, elements of the platinum group. The catalyst layer may include one or more of platinum, palladium, and rhodium, for example, as a precious metal(s). These precious metals have a high capability of promoting burning of PM.

According to still another aspect of the present invention, there is provided the exhaust gas-purifying catalyst according to the above aspects, wherein a ratio M_{M}/V between a mass M_{M} of the precious metal and the volume V of the filter substrate is in a range of 0.01 g/L to 10 g/L. If the ratio M_{M}/V is small, the effect of the precious metal promoting burning of PM is small. Increasing the ratio M_{M}/V leads to high costs. The ratio M_{M}/V is preferably in a range of 0.1 g/L to 5 g/L.

According to still another aspect of the present invention, there is provided the exhaust gas-purifying catalyst according to any one of the above aspects, wherein the catalyst layer further comprises at least one of a porous support supporting the precious metal and a promoter. If the porous support is used, the specific surface area of the precious metal is easily increased. If a promoter such as an oxygen storage material is used, a change in the performance of the catalyst due to variation of the composition of the exhaust gas can be reduced, for example.

The porous support and the promoter are, for example, alumina; a composite oxide of ceria and zirconia; a polycrystal or single crystal mainly composed of the composite oxide and further containing one or more selected from the group consisting of oxides of rare-earth elements other than cerium, oxides of alkaline-earth metal elements, oxides of transition metal elements other than zirconium, alumina, and silica; or a combination of two or more thereof.

The average particle size of each of the porous support and the promoter is preferably in a range of 0.05 um to 5 µm, and more preferably in a range of 0.1 µm to 3 um. The "average particle size" is a median diameter obtained by a laser diffraction/scattering method.

According to still another aspect of the present invention, there is provided the exhaust gas-purifying catalyst according to the above aspects, wherein a ratio Mc/V between a mass Mc of the catalyst layer and the volume V of the filter substrate is 300 g/L or less. The ratio M_{C}/V is preferably 250 g/L or less, more preferably 150 g/L or less, still more preferably 120 g/L or less, and still more preferably 100 g/L or less.

According to still another aspect of the present invention, there is provided the exhaust gas-purifying catalyst according to the above aspects, wherein the ratio M_{C}/V between the mass M_{C} of the catalyst layer and the volume V of the filter substrate is in a range of 10 g/L to 300 g/L. If the ratio Mc/V is small, the contribution of the catalyst layer to reduction of the number of pores having a large opening diameter is small. If the ratio M_{C}/V is increased, the pressure loss in a state where PM is not accumulated is increased. The ratio M_{C}/V is preferably in a range of 20 g/L to 250 g/L, more preferably in a range of 20 g/L to 200 g/L, and still more preferably in a range of 30 g/L to 100 g/L. The lower limit of the ratio Mc/V may be 25 g/L. The upper limit of the ratio Mc/V may be 150 g/L.

According to still another aspect of the present invention, there is provided the exhaust gas-purifying catalyst according to any one of the above aspects, wherein at least a portion of the catalyst layer is positioned in a portion of the porous wall on the first cell side. Herein, the "portion of the porous wall on the first cell side" is a portion of the porous wall whose distance from the first cell-side surface is 80% or less of the thickness of the porous wall. The entire catalyst layer may be positioned in the portion of the porous wall on the first cell side. Alternatively, the catalyst layer may be provided over the entire thickness of the porous wall. Namely, the catalyst layer preferably extends from the first cell-side surface of the wall of the filter substrate to the vicinity of the second cell-side surface of the wall of the filter substrate, for example, extends from the first cell-side surface of the wall of the filter substrate to the second cell-side surface of the wall of the filter substrate. Such a structure is particularly advantageous for reducing the pressure loss in a state where PM is not accumulated. Such a structure is also particularly advantageous for reliably burning PM and also purifying other harmful substances.

According to still another aspect of the present invention, there is provided the exhaust gas-purifying catalyst according to any one of the above aspects, wherein a portion of the porous wall on the first cell side, that is, a portion of the filter wall of the catalyst-coated filter on the first cell side has a cross section perpendicular to the surface, pores of the filter substrate includes first pores having a pore diameter of 5 µm or more and less than 10 µm at the cross section, second pores having a pore diameter of 10 µm or more and less than 20 µm at the cross section, and third pores having a pore diameter of 20 µm or more at cross section, a filling rate R_{F1} of the first pores with the catalyst layer, a filling rate R_{F2} of the second pores with the catalyst layer, and a filling rate R_{F3} of the third pores with the catalyst layer satisfy a relationship represented by an equation R_{F1} < R_{F2} < R_{F3}.

Herein, the filling rate R_{F1} is a ratio of a total area S_{C1} of the portions of the catalyst layer positioned in the first pores to a total area S_{F1} of the first pores in the cross section. The filling rate R_{F2} is a ratio of a total area S_{C2} of the portions of the catalyst layer positioned in the second pores to a total area S_{F2} of the second pores in the cross section. The filling rate R_{F3} is a ratio of a total area S_{C3} of the portions of the catalyst layer positioned in the third pores to a total area S_{F3} of the third pores in the cross section.

Herein, the boundary between pores connected to each other and the pore diameter of the respective pores are determined by the method described later with reference to the drawings.

The configuration specified by the above inequality can be used to suppress an increase in the pressure loss in a state where PM is not accumulated and reduce the number of pores having a large opening diameter.

According to still another aspect of the present invention, there is provided the exhaust gas-purifying catalyst according to the above aspects, wherein the filling rate R_{F1} is 40% or less, the filling rate R_{F2} is 40% or less, and the filling rate R_{F3} is 45% or less.

If the above filling rates are increased, the pressure loss in a state where PM is not accumulated is increased.

According to still another aspect of the present invention, there is provided the exhaust gas-purifying catalyst according to any one of the above aspects, wherein the filling rate R_{F3} is 20% or more. If the filling rate R_{F3} is small, a sufficient amount of catalyst cannot be provided in the exhaust gas passage, which causes disadvantage to removal of harmful substances.

According to still another aspect of the present invention, there is provided the exhaust gas-purifying catalyst according to any one of the above aspects, wherein the filling rate R_{F1} is 10% or more, and the filling rate R_{F2} is 15% or more.

The filling rates R_{F1} and R_{F2} are preferably small. Since a large amount of exhaust gas flows through the third pores, it is preferable to reduce the filling rates R_{F1} and R_{F2} and increase the filling rate R_{F3} in view of burning of PM and removal of other harmful substances.

According to still another aspect of the present invention, there is provided the exhaust gas-purifying catalyst according to any one of the above aspects, further comprising inorganic particles in a powder form supported by the catalyst-coated filter. Hereinafter, the exhaust gas-purifying catalyst further comprising inorganic particles in a powder form will be referred to as a "powder-added catalyst-coated filter".

Herein, the "inorganic particles in powdered form" may be in a state where the particles are not fixed to each other or to other articles, or may be in a state where such particles are fixed onto other articles through heat treatment or chemical treatment.

The inorganic particles in a powder form can be used together with the catalyst layer to reduce the number of pores having a large opening diameter. The inorganic particles may be primary particles or secondary particles.

According to still another aspect of the present invention, there is provided the exhaust gas-purifying catalyst according to the above aspects, wherein the inorganic particles are localized on the first cell side of the porous wall. Alternatively, according to still another aspect of the present invention, there is provided the exhaust gas-purifying catalyst according to any one of the above aspects, wherein an amount A, an amount A1, and an amount A2 satisfy a relationship represented by the inequality (A1+A2)/A ≥ 90%, the amount A being a total amount of the inorganic particles, the amount A1 being an amount of the inorganic particles positioned above the surface of the catalyst-coated filter on the first cell side, and the amount A2 being an amount of the inorganic particles which are in the pores of the catalyst-coated filter and whose distances from the surface of the catalyst-coated filter on the first cell side is 20% or less of the thickness of the portion of the catalyst-coated filter corresponding to the porous wall, that is, the thickness of the filter wall of the catalyst-coated filter.

Herein, the localization of the inorganic particles as described above can be confirmed by the following method. First, an image of a cross section of the porous wall is captured by an electron scanning microscope to obtain a gray-scale image. The imaging is performed on the cross section of the portion of the porous wall where the distance from the first end is equal to the distance from the second end. Next, the position of analysis by an energy dispersive X-ray analyzer is specified on the obtained gray-scale image to measure the intensity of the character X-rays emitted by the elements included only in the inorganic particles. Herein, a linear analysis along the thickness direction of the porous wall is performed. The localization of the inorganic particles as described above can be confirmed from the result of the analysis. The localization of the inorganic particles as described above can also be confirmed in a composite image formed by superimposing points that are colored and have brightness corresponding to the intensity of the character X-rays on the obtained gray-scale image.

The configuration in which the inorganic particles are localized as described above can be used to reduce the number of pores on the first cell-side surface that have a large opening diameter.

The proportion (A1+A2)/A, which represents the degree of localization of the inorganic particles on the first cell side of the porous wall is preferably 90% or more. The upper limit of the proportion (A1+A2)/A is not limited. The proportion (A1+A2)/A may be 100%.

According to still another aspect of the present invention, there is provided the exhaust gas-purifying catalyst according to any one of the above aspects, wherein the pores of the catalyst-coated filter include first small pores having an opening diameter of less than 40 µm at the surface and first large pores having an opening diameter of 40 um at the surface, and pores of a portion of the powder-added catalyst-coated filter corresponding to the catalyst-coated filter, specifically, pores of the filter wall include second small pores having an opening diameter of less than 40 um at a surface of the portion on the first cell side and second large pores having an opening diameter of 40 µm or more at the surface of the portion, a ratio (S_{S2}-S_{S1}) /S_{S2} of a difference S_{S2}-S_{S1} between a total area S_{S2} of the second small pores and a total area S_{S1} of the first small pores to the total area S_{S2} of the second small pores is 40% or less, and a ratio (S_{L2}-S_{L1}) /S_{L2} of a difference S_{L2}-S_{L1} between a total area S_{L2} of the second large pores and a total area S_{L1} of the first large pores to the total area S_{L2} of the second large pores is 60% or more.

When the ratio (S_{L2}-S_{L1}) /S_{L2} and the ratio (S_{S2}-S_{S1}) /S_{S2} satisfy the above requirements, the degree of reduction of the opening diameters of the large pores due to application of inorganic particles is larger than that of the small pores. Such a configuration is advantageous to obtain, for example, a structure in which the proportion Ss/S of the total area S_{S} of the pores having an opening diameter of less than 40 um in the total area S of all the pores is large, and the proportion Sss/S of the total area S_{SS} of the pores having an opening diameter of less than 20 µm in the total area S of all the pores is small.

According to still another aspect of the present invention, there is provided the exhaust gas-purifying catalyst according to any one of the above aspects, wherein the inorganic particles have an average particle size in a range of 1 um to 50 um.

Herein, the "average particle size" is a median diameter obtained by a laser diffraction/scattering method. The inorganic particles having an average particle size in the above range is suitable for obtaining, for example, a structure in which the proportion Ss/S is large and the proportion Sss/S is small. The average particle size is preferably in a range of 5 um to 10 µm.

According to still another aspect of the present invention, there is provided the exhaust gas-purifying catalyst according to any one of the above aspects, wherein the inorganic particles include one or more selected from the group consisting of a metal oxide, a metal hydroxide, a metal carbonate, a metal phosphate, a metal nitrate, a metal sulfate, a clay mineral, and a porous inorganic substance.

Preferably, the inorganic particles are made of one or more selected from the group consisting of a metal oxide, a metal hydroxide, a metal carbonate, a metal phosphate, a metal nitrate, a metal sulfate, and a porous inorganic substance.

The metal element included in the inorganic particles is, for example, one or more selected from the group consisting of an alkali metal element, an alkaline-earth metal element, a rare-earth element, and a transition metal element. The metal element is preferably one or more selected from the group consisting of calcium, magnesium, strontium, barium, aluminum, silicon, titanium, zirconium, and cerium.

Specific examples of the inorganic particles as a metal oxide, for example, are calcium oxide, cerium oxide, titanium dioxide, zirconium dioxide, silicon dioxide, aluminum oxide, a mixture thereof, and a mixed oxide thereof. The clay mineral may be an artificial clay mineral or a natural clay mineral. As the porous inorganic substance, for example, one or more of zeolite and sepiolite may be used. The inorganic particles preferably include calcium oxide, and more preferably made of calcium oxide.

According to still another aspect of the present invention, there is provided the exhaust gas-purifying catalyst according to any one of the above aspects, wherein a ratio M_{P}/V of a mass M_{P} of the inorganic particles to the volume V of the filter substrate in the powder-added catalyst-coated filter is 3 g/L or more.

If the ratio Mp/V is small, the effect of using the inorganic particles is not exhibited prominently. The ratio M_{P}/V is preferably 5 g/L or more.

According to still another aspect of the present invention, there is provided the exhaust gas-purifying catalyst according to any one of the above aspects, wherein the ratio M_{P}/V of the mass M_{P} of the inorganic particles to the volume V of the filter substrate is 50 g/L or less.

If the ratio M_{P}/V is increased, the pressure loss in a state where PM is not accumulated is increased. The ratio M_{P}/V is preferably 15 g/L or less, and more preferably 10 g/L or less.

According to still another aspect of the present invention, there is provided a method for producing the exhaust gas-purifying catalyst according to any one of the above aspects, the method comprising forming the catalyst layer provided on the pore wall of the filter substrate.

The catalyst layer can be formed by, for example, the method described below.

First, a slurry containing a raw material of the catalyst layer and a dispersion medium is prepared.

The raw material of the catalyst layer includes a catalytic metal and optionally includes at least one of a porous support and a promoter. The catalytic metal may be contained in the slurry, for example, in the form of a metal compound that can be dissolved in the dispersion medium or in the form of a supported catalyst formed of a catalytic metal supported on the porous support. The dispersion medium is, for example, an aqueous solvent such as water.

The slurry is prepared to have an appropriate viscosity. For example, the slurry is prepared so that the viscosity at a shear rate of 400s⁻¹ is in a range of greater than 50 mPa·s and not greater than 150 mPa·s, preferably in a range of 60 mPa·s to 110 mPa·s.

Herein, the above viscosity of the slurry is a viscosity that may be measured at an ambient temperature by a commercially-available shear viscometer. The viscosity at the above shear rate can be easily measured by, for example, using a dynamic viscoelasticity measuring instrument (rheometer) which is standard in this field. Herein, "ambient temperature" is a temperature in a temperature range of 15°C to 35°C, typically a temperature in a temperature range of 20°C to 30°C, and is, for example 25°C.

The slurry may further contain a thickening agent. For example, cellulose polymers such as carboxymethyl cellulose (CMC), methyl cellulose (MC), hydroxypropyl methylcellulose (HPMC), and hydroxyethyl methyl cellulose (HEMC) can be used as the thickening agent. A proportion of the thickening agent in the total solid content in the slurry is not particularly limited as long as the viscosity of the slurry satisfies the above range; however, it is preferably in a range of 0.1% to 5% by mass, more preferably in a range of 0.3% to 4% by mass, and still more preferably in a range of 0.5% to 3% by mass.

Next, the above slurry is supplied to the first end side of the filter substrate, and gas in the filter substrate is suctioned from the second end side of the filter substrate. Thereby, the slurry is allowed to flow into the cells of the filter substrate opened at the first end, and thereafter flow from the surfaces of the walls, which form the above cells, into the pores of the walls. Then, the filter substrate supplied with the slurry is dried, as necessary.

Next, the above slurry is supplied to the second end side of the filter substrate, and gas in the filter substrate is suctioned from the first end side of the filter substrate. Thereby, the slurry is allowed to flow into the cells of the filter substrate opened at a portion corresponding to the second end, and thereafter flow from the surfaces of the walls, which form the above cells, into the pores of the walls. This step may be omitted.

The conditions of the above-described suctioning may vary depending on the cross-sectional diameter of the filter substrate and the like. To give an example, in the case of a columnar filter substrate having a diameter in a range of 80 mm to 250 mm, the suctioning is preferably performed under the condition where a linear velocity (wind velocity) of gas flow near an end of the filter substrate when the filter substrate is installed in an apparatus and there is no supply of the slurry is in a range of 10 m/s to 80 m/s. The suctioning time is not particularly limited, but is preferably in a range of 0.1 to 30 seconds. A preferred combination of the linear velocity and the suctioning time is a combination of 20 to 70 m/s and 0.5 to 25 seconds, and a combination of 40 to 60 m/s and 2 to 15 seconds.

Thereafter, the filter substrate supplied with the slurry is dried and subjected to calcination. In the manner described above, the catalyst-coated filter is obtained. When a high-viscosity slurry is used and suctioning is performed under the above-described conditions, a catalyst-coated filter in which the ratios R_{F1}, R_{F2}, and R_{F3} satisfy the above-described conditions is obtained.

Next, inorganic particles are preferably supplied to the catalyst-coated filter. Specifically, an aerosol containing inorganic particles as aerosol particles is supplied to a first end portion of the catalyst-coated filter corresponding to the first end. Along with this, gas in the catalyst-coated filter is suctioned from a second end portion of the catalyst-coated filter corresponding to the second end. The suctioning is preferably performed with the first end portion of the catalyst-coated filter arranged to face downward.

Through the above operation, the aerosol flows in the cells opened at the first end portion side of the catalyst-coated filter and separated into gas and inorganic particles by the filter walls of the catalyst-coated filter. The airflow resistance of a gas passage formed of a pore having a large pore diameter is smaller than that of a gas passage formed of a pore having a small pore diameter. Therefore, more inorganic particles are accumulated in the pores having a large pore diameter, as compared to the pores having a small pore diameter.

In the catalyst-coated filter with the catalyst layer formed as described above, the pores opened at the surface of the filter wall through which the aerosol flows into the filter wall may include pores having a large pore diameter, but the pore diameters of such pores do not large excessively. Therefore, the inorganic particles can be localized near the surface of the filter wall through which aerosol flows into the filter wall.

In the manner described above, the exhaust gas-purifying catalyst according to any one of the above aspects, in particular, the powder-added catalyst-coated filter, is obtained.

### BRIEF DESCRIPTION OF THE DRAWINGS

FIG. 1 is a schematic cross-sectional view of an exhaust gas-purifying catalyst according to an embodiment of the present invention.
FIG. 2 is an enlarged cross-sectional view of a porous wall of the exhaust gas-purifying catalyst shown in FIG. 1.
FIG. 3 is a further enlarged cross-sectional view of the porous wall of the exhaust gas-purifying catalyst shown in FIG. 1.
FIG. 4 is a cross-sectional view showing a method of separating connected pores in a cross-sectional image of the porous wall.
FIG. 5 is a schematic plan view of a first cell-side surface of the porous wall.
FIG. 6 is an image obtained by binarizing a micrograph of a porous wall of an exhaust gas-purifying catalyst according to Example 1.
FIG. 7 is an image obtained by binarizing a micrograph of a porous wall of an exhaust gas-purifying catalyst according to Comparative Example 1.
FIG. 8 is a graph showing a distribution of the opening diameters obtained for the porous walls of the exhaust gas-purifying catalysts according to Example 1 and Comparative Examples 1 to 3.
FIG. 9 is a graph showing a distribution of powder-form inorganic particles in the thickness direction obtained for the porous wall of the exhaust gas-purifying catalyst according to Example 1.
FIG. 10 is a graph showing a relationship between the proportion Sₛ/S and the pressure loss after PM accumulation obtained for the porous walls of the exhaust gas-purifying catalysts according to Example 1 and Comparative Examples 1 to 3.
FIG. 11 is a graph showing a distribution of the opening diameters obtained for the porous walls of the exhaust gas-purifying catalysts according to Examples 1 to 4.
FIG. 12 is a graph showing a distribution of the opening diameters obtained for the porous walls of the exhaust gas-purifying catalysts according to Examples 1 and 5 and Comparative Examples 1 and 5.

### DETAILED DESCRIPTION

Hereinafter, embodiments of the present invention will be described with reference to the drawings. The embodiments described below further embody any one of the above aspects.

Each of the features described below can be combined with each of the aspects described above. Also, a combination of two or more of the features described below can be combined with each of the aspects described above.

In the drawings referred to below, elements having the same or similar functions are denoted by the same reference symbols, and repeat descriptions will be omitted. The dimensional ratio and the shape shown in the respective drawings may be different from the actual ones.

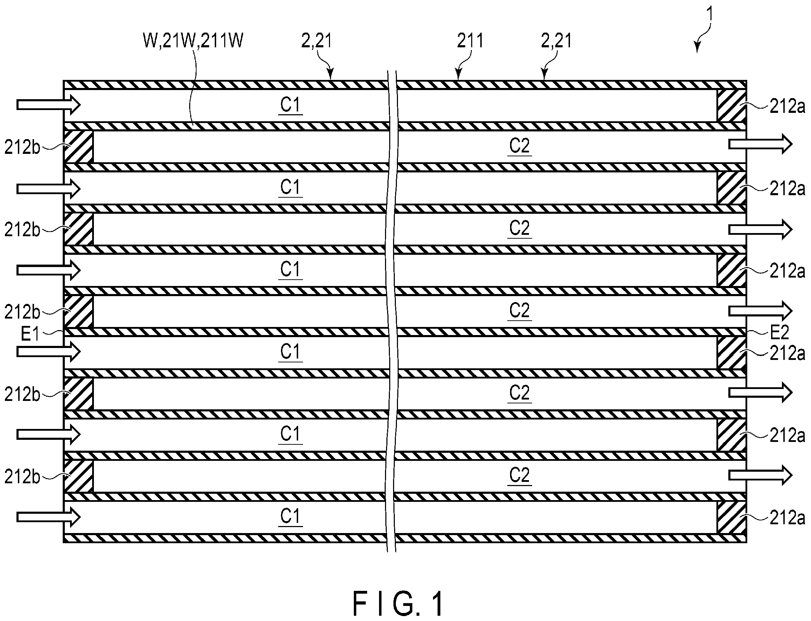

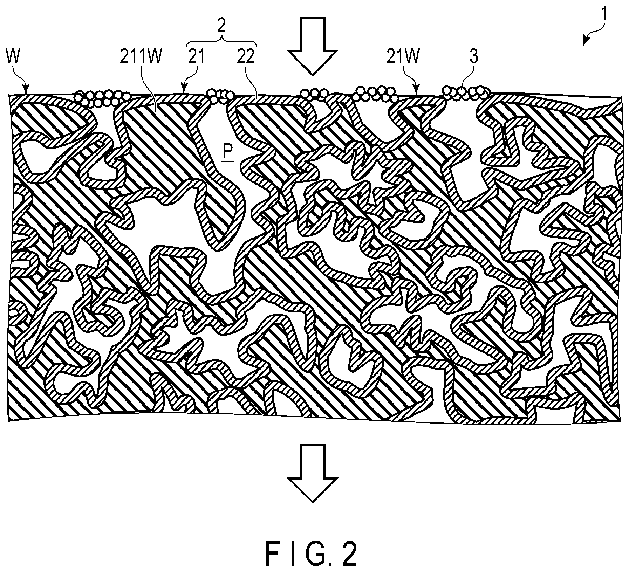

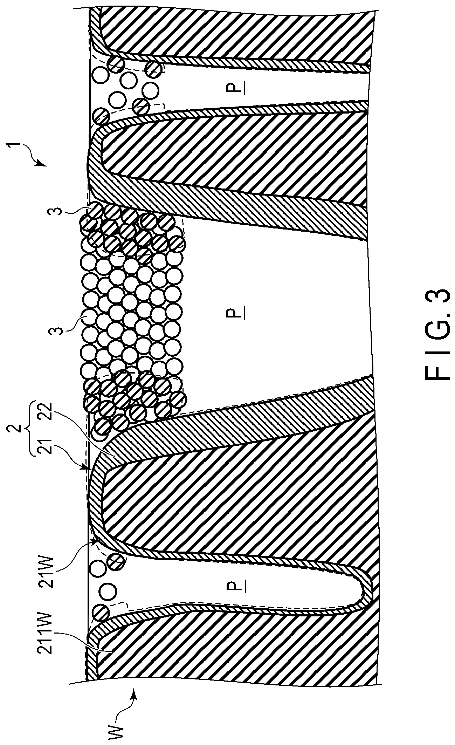

FIG. 1 is a schematic cross-sectional view of an exhaust gas-purifying catalyst according to an embodiment of the present invention. FIG. 2 is an enlarged cross-sectional view of a porous wall of the exhaust gas-purifying catalyst shown in FIG. 1. FIG. 3 is a further enlarged cross-sectional view of the porous wall of the exhaust gas-purifying catalyst shown in FIG. 1. In FIGS. 1 and 2, the outlined arrow indicates a flow direction of exhaust gas.

An exhaust gas-purifying catalyst 1 shown in FIGS. 1 to 3 is a particulate filter including a catalyst layer 22 shown in FIGS. 2 and 3. The exhaust gas-purifying catalyst 1 has a substantially columnar shape. As shown in FIG. 1, the exhaust gas-purifying catalyst 1 includes a first end E1, a second end E2, porous walls W, first cells C1, and second cells C2. The first end E1 and the second end E2 are bases of the column.

The first cells C1 extend from the first end E1 toward the second end E2. The first cells C1 are opened at the first end E1 and closed at the second end E2.

The second cells C2 extend from the second end E2 toward the first end E1. The second cells C2 are opened at the second end E2 and closed at the first end E1.

The first cell C1 and the second cell C2 are adjacent to each other with the porous wall W interposed therebetween. The first cells C1 and the second cells C2 are arranged to form a checkered pattern at the first end E1 and the second end E2.

The exhaust gas-purifying catalyst 1 includes a catalyst-coated filter 2, as shown in FIGS. 1 to 3. The catalyst-coated filter 2 includes a filter substrate 21 and a catalyst layer 22, as shown in FIGS. 2 and 3.

The filter substrate 21 includes a honeycomb structure 211 and plugs 212a and 212b, as shown in FIG. 1.

The honeycomb structure 211 is a column provided with through-holes each extending from one of the bases to the other of the bases. One of the bases corresponds to the first end E1, and the other of the bases corresponds to the second end E2. The honeycomb structure 211 includes walls 211W forming side walls of the through-holes. The walls 211W are porous and separate the adjacent through-holes.

The plugs 212a block some of the holes of the honeycomb structure 211 on the second end E2 side. The first cells C1 are positioned in spaces each surrounded by the plug 212a blocking the hole on the second end E2 side and the wall 211W forming the sidewall of the hole.

The plugs 212b block the remaining holes of the honeycomb structure 211 on the first end E1 side. The second cells C2 are positioned in spaces each surrounded by the plug 212b blocking the hole on the first end E1 side and the wall 211W forming the sidewall of the hole.

These plugs 212a and 212b are disposed in such a manner that the hole whose second end E2 side is blocked by the plug 212a and the hole whose first end E1 side is blocked by the plug 212b are adjacent to each other with the wall 211W interposed therebetween. The first cell C1 and the second cell C2 are adjacent to each other in such a manner that the wall 211W of the filter substrate 21 and the catalyst layer 22 provided on the pore walls of the filter substrate 21 are interposed between the first cell C1 and the second cell C2.

The catalyst layer 22 is supported by the filter substrate 21, as shown in FIGS. 2 and 3. Specifically, the catalyst layer 22 is provided on the pore walls of the filter substrate 21. Namely, the catalyst layer 22 covers the pore inner walls of the wall 211W.

In this structure, the catalyst layer 22 is provided over the entire thickness of the porous wall W or the wall 211W. A portion of the catalyst layer 22 which covers the pore inner walls of the wall 211W and whose distance from the surface of the wall 211W on the first cell C1 side is equal to or greater than a predetermined value can be omitted. Namely, the entire catalyst layer 22 may be positioned on the portion of the porous wall W or the wall 211W on the first cell C1 side.

The wall 211W and the portion of the catalyst layer 22 supported by the wall 211W form the filter wall 21W. The filter wall 21W is porous.

The exhaust gas-purifying catalyst 1 further includes inorganic particles 3, as shown in FIGS. 2 and 3. The inorganic particles 3 are positioned on the surface of the porous wall W or the filter wall 21W on the first cell C1 side or positioned near said surface.

The inorganic particles 3 are in a powder form. Although at least some of the inorganic particles 3 are adhered to the catalyst-coated filter 2, the inorganic particles 3 are not fixed to the catalyst-coated filter 2. Also, the inorganic particles 3 are not fixed to each other. The inorganic particles 3 can be fixed by heat treatment or chemical treatment.

The inorganic particles 3 reduce the pore diameter of the pores near the surface of the porous wall W on the first cell C1 side. Near the surface of the porous wall W on the first cell C1 side, the filling rate of the pores of the filter wall 21W with the inorganic particles 3 tends to be low for the pores having a small opening diameter and tends to be high for the pores having a large opening diameter.

In the exhaust gas-purifying catalyst 1, a proportion S_{S}/S of a total area S_{S} of the pores having an opening diameter of less than 40 µm at the surface of the porous wall W on the first cell C1 side in a total area S of all the pores at the surface is 65% or more. As described above, in such an exhaust gas-purifying catalyst 1, PM is less likely to reach the pores positioned far away from the surface of the porous wall W on the first cell C1 side. Therefore, the amount of PM accumulated in the pores P of the porous wall W is small, and narrowing or closure of a gas passage in the porous wall W is less likely to occur. Accordingly, the pressure loss of the exhaust gas-purifying catalyst 1 caused by accumulation of PM is small.

The catalyst layer 22 is preferably configured so that the porous wall W has the structure described below.

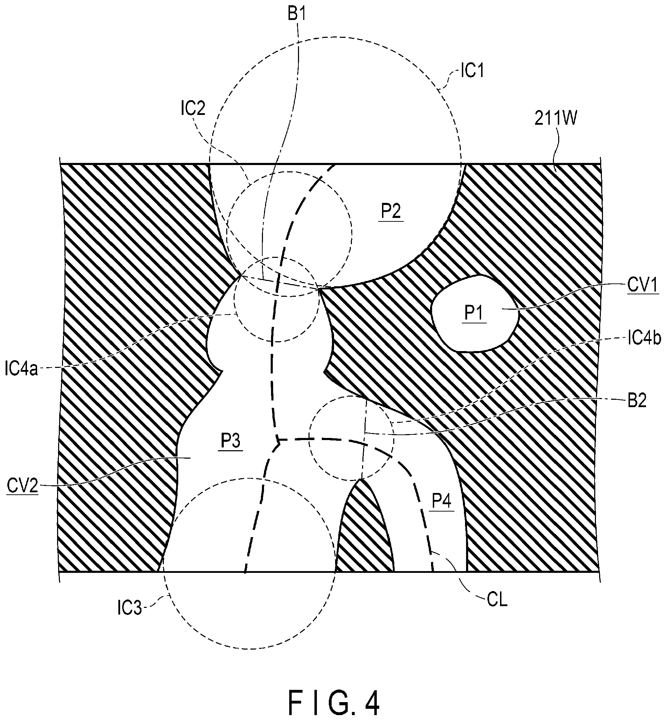

Namely, it is preferable that the portion of the porous wall W on the first cell C1 side has a cross section perpendicular to the surface of the porous wall W on the first cell C1 side, the pores of the filter substrate 21 include first pores having a pore diameter of 5 µm or more and less than 10 um at the cross section, second pores having a pore diameter of 10 µm or more and less than 20 µm at the cross section, and third pores having a pore diameter of 20 µm or more at the cross section, and a ratio R_{F1} of a total area S_{C1} of the portions of the catalyst layer 22 positioned in the first pores to a total area S_{F1} of the first pores, a ratio R_{F2} of a total area S_{C2} of the portions of the catalyst layer 22 positioned in the second pores to a total area S_{F2} of the second pores, and a ratio R_{F3} of a total area S_{C3} of the portions of the catalyst layer 22 positioned in the third pores to a total area S_{F3} of the third pores satisfy a relationship represented by the inequality R_{F1} < R_{F2} < R_{F3}. Herein, the boundary between the pores connected to each other and the pore diameter of the respective pores are determined by the method described later with reference to FIG. 4.

In such a configuration, for example, the portion of the filter wall 21W near the surface on the first cell C1 side has a width of the pore size distribution narrower and an average pore diameter smaller than those of the portion of the wall 211W near the surface on the first cell C1 side.

FIG. 4 is a cross-sectional view showing a method of separating connected pores in a cross-sectional image of the porous wall. FIG. 4 corresponds to a cross-sectional image of the porous wall W. In FIG. 4, the catalyst layer 22 and the inorganic particles 3 described later are omitted.

### (Step S1)

In this method, firstly, an image of a cross section of the porous wall W is captured using an electron scanning microscope (SEM) or a transmission electron microscope (TEM). This cross section is a cross section perpendicular to the surface of the porous wall W on the first cell C1 side, that is, a cross section parallel to the thickness direction of the porous wall W.

### (Step S2)

Next, the wall 211W of the filter substrate 21 (hereinafter referred to as a "wall portion") is specified in the image thus obtained. A space portion is specified in the wall portion. In this step, not only a space portion spaced apart from both surfaces of the wall 211W as shown by a space portion CV1, but also a space portion opened on at least one of the surfaces of the wall 211W as shown by a space portion CV2 are specified. A part of the catalyst layer 22 or inorganic particles 3 may be positioned in the space portion. Then, one of the space portions is selected.

### (Step S3)

Next, an area of the selected space portion is determined, and a diameter of a circle having the same area as the area of the selected space portion, that is, an equivalent circle diameter is calculated. Then, whether or not the equivalent circle diameter is 5 µm or less is determined.

### (Step S4)

If the equivalent circle diameter is 5 µm or less, it is determined that the above space portion corresponds to a single pore, and the equivalent circle diameter thereof is set as the pore diameter of this pore. If there are non-selected space portions, one of the non-selected space portions is selected, and the process returns to step S3. If there are no non-selected space portions, the process is completed.

When the space portion CV1 is selected in the example shown in FIG. 4, it is determined that the space portion CV1 corresponds to a single pore P1 because the equivalent circle diameter of the space portion CV1 is 5 µm or less. This equivalent circle diameter is determined to be the pore diameter of the pore P1. Then, the non-selected space portion CV2 is selected, and the process returns to step S3.

### (Step S5)

If the equivalent circle diameter is more than 5 um, it is determined that the above space portion corresponds to two or more pores connected to each other. The space portion is divided at positions where the equivalent circle diameter is reduced to 50% of the equivalent circle diameter of more than 5 µm, and the boundaries between the regions created thereby are determined as boundaries of the pores.

When the space portion CV2 is selected in the example shown in FIG. 4, it is determined that the space portion CV2 corresponds to two or more pores connected to each other because the equivalent circle diameter of the space portion CV2 is more than 5 µm. The space portion CV2 is divided at positions where the equivalent circle diameter is reduced to 50% of the equivalent circle diameter of more than 5 um, and the boundaries between the regions created thereby are determined as boundaries of the pores.

### (Substep SS1)

To be specific, firstly, a number of circles that are inscribed in the space portion are created such that each circle is in contact with a pair of wall surface portions facing each other with the space portion interposed therebetween. Herein, the wall surface portion is a portion corresponding to the boundary between the space portion and the wall portion. In this substep, only the circles whose respective centers are positioned between a pair of main surfaces of the wall 211W are created. A reference line is created by connecting the centers of these circles. In the example shown in FIG. 4, the branched broken line CL is the reference line obtained by connecting the centers of the circles.

### (Substep SS2)

Next, among the above circles, a circle having the largest diameter is specified (hereinafter, the circle is referred to as a "reference circle"). In the example shown in FIG. 4, the circle IC1 is specified.

### (Substep SS3)

Subsequently, the diameters of the circles whose centers are aligned in one direction (hereinafter referred to as a "first direction") from the center of the reference circle along the reference line are confirmed by starting from a circle having a center closest to the center of the reference circle. The confirmation of the diameters is performed until a circle having a diameter which is 50% of the diameter of the reference circle is found.

When such a circle (hereinafter referred to as a "first circle") is found, a line segment connecting two contact points between the first circle and the wall surface portions is set as the boundary dividing the space portion. If the first circle is not found, no boundary dividing the space portion is set for the portion of the reference line on the first direction side with respect to the center of the reference circle.

In the example shown in FIG. 4, when the diameters of the circles whose centers are aligned in a downward direction from the center of the circle IC1 along the broken line CL are confirmed by starting from a circle having a center closest to the center of the circle IC1, a circle IC2 is found as a circle having a diameter which is 50% of the diameter of the circle IC1. Therefore, a line segment B1 connecting two contact points between the circle IC2 and the wall surface portions is set as a boundary dividing the space portion CV2.

### (Substep SS4)

Subsequently, the diameters of the circles whose centers are aligned in a reverse direction (hereinafter referred to as a "second direction") from the center of the reference circle along the reference line are confirmed by starting from a circle having a center closest to the center of the reference circle. The confirmation of the diameters is performed until a circle having a diameter which is 50% of the diameter of the reference circle is found.

When such a circle (hereinafter referred to as a "second circle") is found, a line segment connecting two contact points between the second circle and the wall surface portions is set as a boundary dividing the space portion. When the second circle is not found, no boundary dividing the space portion is set for the portion of the reference line on the second direction side with respect to the center of the reference circle.

In the example shown in FIG. 4, even when the diameters of the circles whose centers are aligned in an upward direction from the center of the circle IC1 along the broken line CL are confirmed by starting from a circle having a center closest to the center of the circle IC1, a circle having a diameter which is 50% of the diameter of the circle IC1 is not found. Therefore, no boundary dividing the space portion CV2 is set for the portion of the broken line CL on the upper direction side with respect to the center of the circle IC1.

### (Substep SS5)

Determination is made as to whether or not the reference line is branched within the range of the portion corresponding to the line connecting the centers of the circles whose diameters were confirmed in substep SS4 or SS5.

If the reference line is branched within the above range, the same processing as that of substep SS4 is also performed for the respective branch destinations.

Namely, the diameters of the circles whose centers are aligned in a branched direction (hereinafter referred to as a "third direction") from the branch point along the reference line are confirmed by starting from a circle having a center closest to the branch point. The confirmation of the diameters is performed until a circle having a diameter which is 50% of the diameter of the reference circle is found.

When such a circle (hereinafter referred to as a "third circle") is found, a line segment connecting two contact points between the third circle and the wall surface portions is set as the boundary dividing the space portion. If the third circle is not found, no boundary dividing the space portion is set for the portion of the reference line on the third direction side with respect to the branch point.

When the above processing is completed, or when the reference line is not branched within the aforementioned range, the process proceeds to next step S6.

In the example shown in FIG. 4, the broken line CL is not branched within the range of the portion corresponding to the line connecting the centers of the circles whose diameters were confirmed based on the circle IC1 as a reference circle in substep SS4 or SS5. Therefore, the process proceeds to next step S6 without setting an additional boundary in substep SS5.

### (Step S6)

In step S6, whether or not a boundary has been set in step S5 is determined.

### (Step S7)

If not a single boundary is set in step S5, it is determined that the above-described space portion is a single pore, and the equivalent circle diameter thereof is set as the pore diameter of this pore. If there are non-selected space portions, one of the non-selected space portions is selected, and the process returns to step S3. If there are no non-selected space portions, the process is completed.

### (Step S8)

If one or more boundaries are set in step S5, it is determined that a region where the center of the reference circle is positioned among the regions formed by dividing the above-described space portion with a boundary is a single pore, and the equivalent circle diameter thereof is set as the pore diameter of this pore.

Subsequently, the portion excluding the above region, in which the center of the reference circle is positioned, from the above space portion is set as a new space portion. Selecting this space portion, the process returns to step S3.

In the example shown in FIG. 4, it is determined that a region where the center of the circle IC1 is positioned among the regions formed by dividing the space portion CV2 with a boundary B1 is a single pore P2, and the equivalent circle diameter thereof is set as the pore diameter of the pore P2. Then, the portion excluding the region corresponding to the pore P2, in which the center of the circle IC1 is positioned, from the space portion CV2 (hereinafter said portion is referred to as a "first remaining portion") is set as a new space portion. Selecting this space portion, the process returns to step S3.

Since the above first remaining portion has an equivalent circle diameter of more than 5 µm, a circle IC3 is specified as a reference circle in step S5. No additional reference line may be created. In step S5, circles IC4a and IC4b having a diameter which is 50% of the diameter of the circle IC3 and boundaries B1 and B2 are further specified. Through step S6, it is then determined in step S8 that a region where the center of the circle IC2 is positioned among the regions formed by dividing the first remaining portion with the boundaries B1 and B2 is a single pore P3, and the equivalent circle diameter thereof is set as the pore diameter of the pore P3. Then, the portion excluding the region corresponding to the pore P3, in which the center of the circle IC2 is positioned, from the first remaining portion (hereinafter said portion is referred to as a "second remaining portion") is set as a new space portion. Selecting this space portion, the process returns to step S3.

Since the above second remaining portion has an equivalent circle diameter of 5 µm or less, it is determined in step S4 that the second remaining portion corresponds to a single pore P4, and the equivalent circle diameter thereof is set as the pore diameter of the pore P4. If there are non-selected space portions, one of the non-selected space portions is selected, and the process returns to step S3. If there are no non-selected space portions, the process is completed.

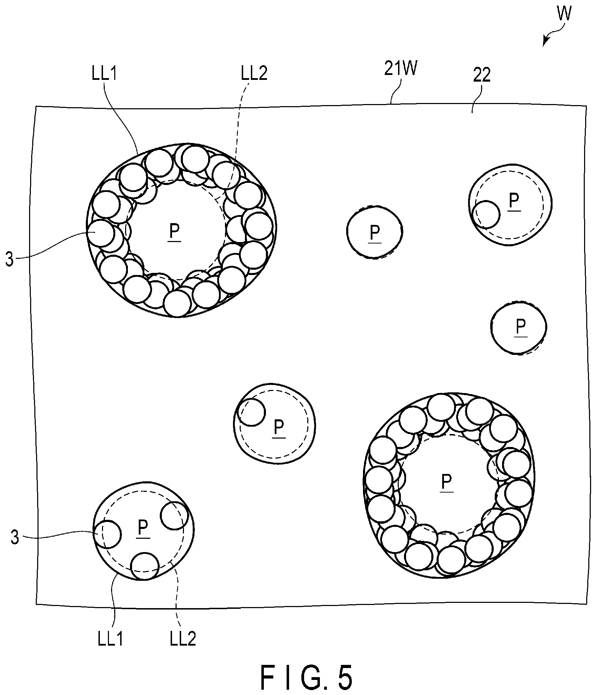

The porous wall W preferably has the structure described below with reference to FIG. 5.

FIG. 5 is a schematic plan view of the first cell-side surface of the porous wall. FIG. 5 shows the surface of the porous wall W on the first cell C1 side.

On the aforementioned surface, the pores P of the porous wall W are classified into first small pores having an opening diameter of less than 40 um and first large pores having an opening diameter of 40 µm or more. For example, in FIG. 5, the pores P on the lower right side and the upper left side are the first large pores, and the remaining pores P are the first small pores. The circle formed by the broken line LL2 is a circle having an area equal to the area of the opening of the pore P. Therefore, the opening diameters of the pores P are the diameters of the circles formed by the broken line LL2.

On the first cell-side surface of the portion of the catalyst-coated filter corresponding to the porous wall W, that is, the first cell-side surface of the filter wall 21W, the pores of the filter wall 21W are classified into second small pores having an opening diameter of less than 40 um and second large pores having an opening diameter of 40 µm or more. For example, in FIG. 5, the pores on the lower right side and the upper left side among the pores of the filter wall 21W are the second large pores, and the remaining pores are the second small pores. In FIG. 5, the pores of the filter wall 21W are the regions surrounded by a solid line LL1. Therefore, the opening diameters of the pores of the filter wall 21W are the diameters of the circles having an area equal to the areas of the regions surrounded by the solid line LL1.

A proportion (S_{S2}-S_{S1})/S_{S2} of a difference S_{S2}-S_{S1} between a total area S_{S2} of the second small pores and a total area S_{S1} of the first small pores to the total area S_{S2} of the second small pores is 40% or less. Also, a proportion (S_{L2}-S_{L1})/S_{L2} of a difference S_{L2}-S_{L1} between a total area S_{L2} of the second large pores and a total area S_{L1} of the first large pores to the total area S_{L2} of the second large pores is 60% or more.

In the above structure, the degree of reduction of the opening diameters of the second large pores due to application of inorganic particles 3 is larger than that of the second small pores. Such a configuration is advantageous for, for example, reducing the number of pores P having an excessively large opening diameter or an excessively small opening diameter on the first cell-side surface of the porous wall.

### <Examples>

Specific examples of the present invention will be described below.

### <1> Production of Exhaust Gas-purifying Catalyst

### (Example 1)

The exhaust gas-purifying catalyst described with reference to FIGS. 1 to 3 was produced by the method described below.

First, a solution of palladium nitrate in an amount of 3 parts by mass, an alumina powder in an amount of 35 parts by mass, a ceria-containing oxide in an amount of 32 parts by mass, and ion-exchanged water were mixed together. A polycarboxylic acid in an amount of 1 part by mass was mixed in the resultant mixed solution, thereby preparing a slurry. The slurry had a viscosity η₄₀₀ of 100 mPa·s at a temperature of 25°C and a shear rate of 400s⁻¹.

Next, a filter substrate was prepared. In this example, a columnar filter substrate having a volume of 1.3 L and a height of 114.3 mm was used.

Next, the above slurry was supplied to one of the end surfaces (a first end surface) of the filter substrate, and gas in the filter substrate was suctioned from the other of the end surfaces (a second end surface) of the filter substrate. The suctioning was performed at a temperature of 25°C and under the conditions where a linear velocity (wind velocity) of gas flow near an end of the filter substrate when the filter substrate was installed and there was no supply of the slurry was 50 m/s. In this manner, the wall of the filter substrate was coated with the slurry. The slurry was supplied so that the amount of a catalyst layer with respect to the volume of the filter substrate was 75 g/L in the catalyst-coated filter.

Then, the filter substrate coated with the slurry was dried and calcined.

In this manner, the catalyst-coated filter was obtained.

Next, inorganic particles were supplied to one of the surfaces of each filter wall of the catalyst-coated filter. Specifically, aerosol containing inorganic particles as aerosol particles was supplied to the first end portion of the catalyst-coated filter corresponding to the first end surface. Along with this, gas in the catalyst-coated filter was suctioned from the second end portion of the catalyst-coated filter corresponding to the second end surface. The suctioning was performed with the catalyst-coated filter arranged so that the first end portion thereof faces downward.

The amount of the inorganic particles with respect to the volume of the filter substrate was 5 g/L. As the inorganic particles, sepiolite, which is a porous inorganic substance, having an average particle size of 6 µm was used.

In this manner, an exhaust gas-purifying catalyst was obtained.

### (Comparative Example 1)

An exhaust gas-purifying catalyst was produced by the same method as described in Example 1, except that supply of inorganic particles to the catalyst-coated filter was omitted. Namely, a catalyst-coated filter was produced by the same method as described in Example 1 and used as the exhaust gas-purifying catalyst according to Comparative Example 1.

### (Comparative Example 2)

An exhaust gas-purifying catalyst was produced by the same method as described in Example 1, except that the proportion of the amount of the catalyst layer to the volume of the filter substrate was changed from 75 g/L to 50 g/L and supply of inorganic particles to the catalyst-coated filter was omitted.

### (Comparative Example 3)

An exhaust gas-purifying catalyst was produced by the same method as described in Example 1, except that the proportion of the amount of the catalyst layer to the volume of the filter substrate was changed from 75 g/L to 100 g/L and supply of inorganic particles to the catalyst-coated filter was omitted.

### <2> Measurement of Opening Diameter

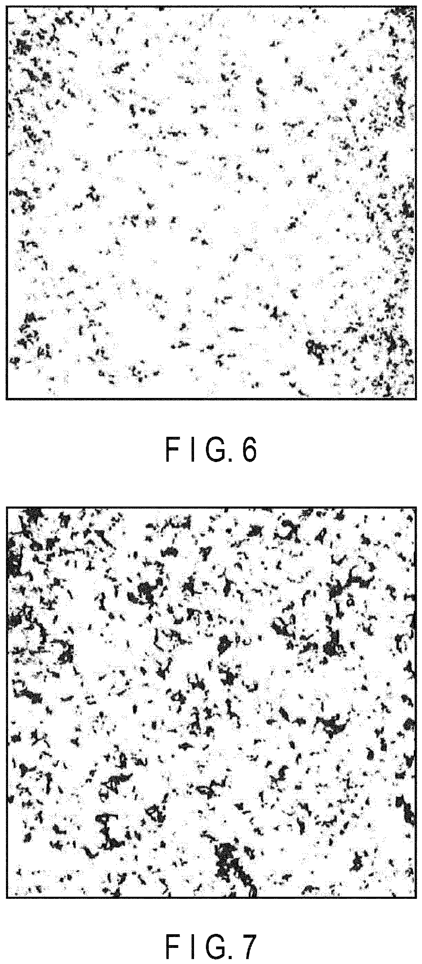

The opening diameters on the first cell-side surface of the porous wall of the respective exhaust gas-purifying catalysts according to Example 1 and Comparative Examples 1 to 3 were measured by the above-described method. The results are shown in FIG. 6 to 8 and Table 1.

**TABLE 1**

| | Amount (g/L) | | S_{<20}/S (%) | S₂₀₋₄₀/S (%) | S₄₀₋₆₀/S (%) | S₆₀₋₈₀/S (%) | S₈₀₋₁₀₀/S (%) | S_{100<}/S (%) |
|---|---|---|---|---|---|---|---|---|
| | Catalyst layer | Inorganic particles | | | | | | |
| Ex. 1 | 75 | 5 | 43.4 | 38.4 | 13.6 | 4.6 | 0 | 0 |
| Comp. Ex. 1 | 75 | 0 | 28.1 | 31.7 | 21.6 | 9.6 | 5.6 | 3.5 |
| Comp. Ex. 2 | 50 | 0 | 24.9 | 35.3 | 21.7 | 13 | 2.8 | 2.1 |
| Comp. Ex. 3 | 100 | 0 | 28.1 | 28.3 | 22.4 | 9.9 | 6.6 | 4.7 |

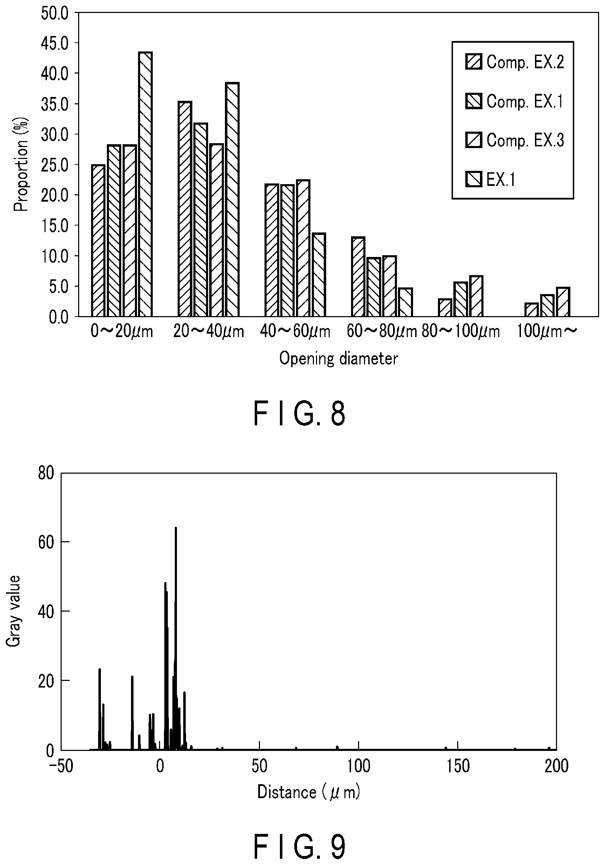

FIG. 6 is an image obtained by binarizing a micrograph of the porous wall of the exhaust gas-purifying catalyst according to Example 1. FIG. 7 is an image obtained by binarizing a micrograph of the porous wall of the exhaust gas-purifying catalyst according to Comparative Example 1. FIG. 8 is a graph showing a distribution of the opening diameters obtained for the porous walls of the exhaust gas-purifying catalysts according to Example 1 and Comparative Examples 1 to 3.

In Table 1, "S_{<20}/S" represents a proportion of a total area S_{<20} of pores having an opening diameter of less than 20 µm in the total area S of all the pores in the micrograph of the first cell-side surface of the porous wall. "S₂₀₋₄₀/S" represents a proportion of a total area S₂₀₋₄₀ of pores having an opening diameter in a range of 20 µm or more and less than 40 µm in the total area S of all the pores in the above micrograph. "S₄₀₋₆₀/S" represents a proportion of a total area S₄₀₋₆₀ of pores having an opening diameter in a range of 40 µm or more and less than 60 µm in the total area S of all the pores in the above micrograph. "S₆₀₋₈₀/S" represents a proportion of a total area S₆₀₋₈₀ of pores having an opening diameter in a range of 60 µm or more and less than 80 µm in the total area S of all the pores in the above micrograph. "S₈₀₋₁₀₀/S" represents a proportion of a total area S₈₀₋₁₀₀ of pores having an opening diameter in a range of 80 µm or more and less than 100 µm in the total area S of all the pores in the above micrograph. "S_{100<}/S" represents a proportion of a total area S_{100<} of pores having an opening diameter of 100 um or more in the total area S of all the pores in the above micrograph.

As shown in FIGS. 6 to 8 and Table 1, in the exhaust gas-purifying catalyst according to Example 1, a proportion of pores having a large opening diameter on the first cell-side surface of the porous wall was smaller than that in the exhaust gas-purifying catalyst according to Comparative Examples 1 to 3.

### <3> Measurement of Filling Rate

For the exhaust gas-purifying catalyst according to Example 1, the above-described proportion (S_{S2}-S_{S1})/S_{S2} and proportion (S_{L2}-S_{L1}) /S_{L2} were calculated.

Specifically, for the exhaust gas-purifying catalyst according to Example 1, a sum of the total areas S_{<20} and S₂₀₋₄₀ obtained for calculating the above opening diameter was determined as the total area S_{S1} of the exhaust gas-purifying catalyst according to Example 1. Also, for the exhaust gas-purifying catalyst according to Example 1, a sum of the total areas S₄₀₋₆₀, S₆₀₋₈₀, S₈₀₋₁₀₀, and S_{100<} obtained for calculating the above opening diameter was determined as the total area S_{L1} of the exhaust gas-purifying catalyst according to Example 1. For the exhaust gas-purifying catalyst according to Comparative Example 1, a sum of the total areas S_{<20} and S₂₀₋₄₀ obtained for calculating the above opening diameter was determined as the total area S_{S2} of the exhaust gas-purifying catalyst according to Comparative Example 1. Also, for the exhaust gas-purifying catalyst according to Comparative Example 1, a sum of the total areas S₄₀₋₆₀, S₆₀₋₈₀, S₈₀₋₁₀₀, and S_{100<} obtained for calculating the above opening diameter was determined as the total area S_{L2} of the exhaust gas-purifying catalyst according to Comparative Example 1. The results of the calculation are shown in Table 2 below.

**TABLE 2**

| | S_{S1} | S_{S2} | S_{L1} | S_{L2} | (S_{S2}-S_{S1}) /S_{S2} | (S_{L2}-S_{L1}) /S_{L2} |
|---|---|---|---|---|---|---|
| Ex.1 | 55103 | 40043 | 37079 | 8938 | 0.273 | 0.759 |

As shown in Table 2, in the exhaust gas-purifying catalyst according to Example 1, the proportion (S_{L2}-S_{L1})/S_{L2} was larger than the proportion (S_{S2}-S_{S1})/S_{S2}. Namely, in the exhaust gas-purifying catalyst according to Example 1, the pores having a large opening diameter among the pores opened on the first cell-side surface of the porous wall had a higher filling rate with the inorganic particles than that of the pores having a small opening diameter.

### <4> Measurement of Distribution of Inorganic Particles

A distribution of the inorganic particles in the thickness direction of the porous wall of the exhaust gas-purifying catalyst according to Example 1 was measured. Specifically, an image of a cross section of the porous wall of the exhaust gas-purifying catalyst according to Example 1 was captured by an electron scanning microscope to obtain a gray-scale image. The imaging was performed on the cross section of the portion of the porous wall where a distance from the first end is equal to a distance from the second end. Next, the position of analysis by an energy dispersive X-ray analyzer was specified on the obtained gray-scale image to measure the intensity of the character X-rays originating in calcium. Herein, a linear analysis along the thickness direction of the porous wall was performed. A composite image formed by superimposing points that are colored and have a brightness (gray value) corresponding to the intensity of the character X-rays on the obtained gray-scale image was generated. A relationship between the distance from the first cell-side surface of the catalyst-coated filter and the gray value was determined from the composite image.

FIG. 9 is a graph showing a distribution of powdered inorganic particles in the thickness direction obtained for the porous wall of the exhaust gas-purifying catalyst according to Example 1. In FIG. 9, the horizontal axis represents a distance from the first cell-side surface of the catalyst-coated filter, and the vertical axis represents the above gray value.

As shown in FIG. 9, in the exhaust gas-purifying catalyst according to Example 1, the inorganic particles were localized on the first cell side of the porous wall. In the exhaust gas-purifying catalyst according to Example 1, the above-described amounts A, A1, and A2 satisfied the relationship represented by the inequality (A1+A2)/A ≥ 90%. Specifically, the proportion (A1+A2)/A was 98.7%.

### <5> Evaluation of Pressure Loss

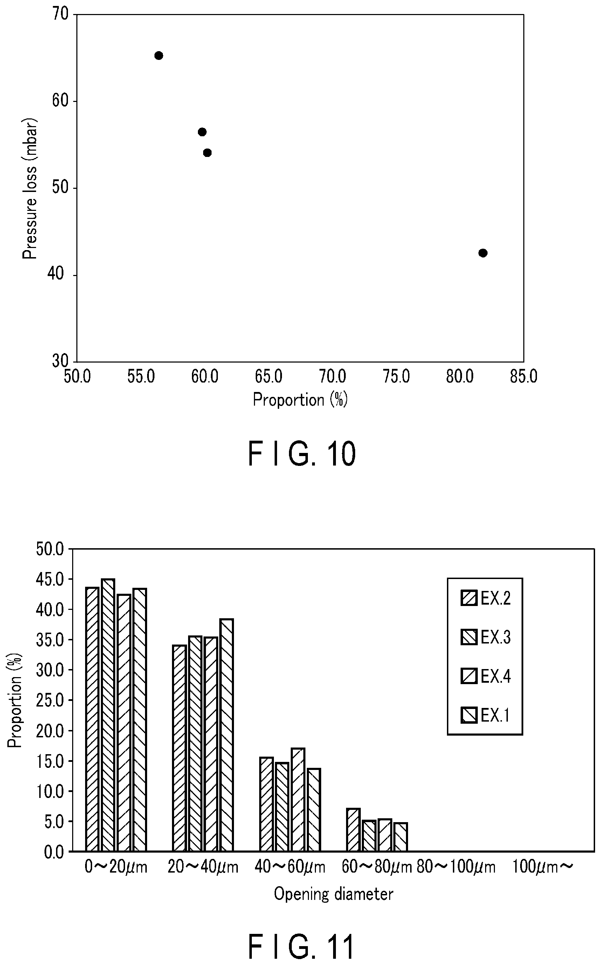

The pressure loss of the respective exhaust gas-purifying catalysts according to Example 1 and Comparative Examples 1 to 3 was evaluated. Specifically, light oil was burned using a soot generator to generate PM, and PM was accumulated in the respective exhaust gas-purifying catalysts. At the point of the time when the amount of PM accumulated reached 1 g/L, the pressure loss of the respective exhaustgas-purifying catalysts was measured. The pressure loss was measured at a gas temperature of 240°C and a gas flow rate of 250 kg/hour. The results are shown in Table 3 and FIG. 10.

**TABLE 3**

| | Amount (g/L) | | Sₛ/S (%) | S_{M+L}/S (%) | Pressure loss (mbar) |
|---|---|---|---|---|---|
| | Catalyst layer | Inorganic particles | | | |
| Ex. 1 | 75 | 5 | 81.8 | 18.2 | 42.5 |
| Comp. Ex. 1 | 75 | 0 | 59.8 | 40.2 | 56.5 |
| Comp. Ex. 2 | 50 | 0 | 60.3 | 39.7 | 54.1 |
| Comp. Ex. 3 | 100 | 0 | 56.4 | 43.6 | 65.3 |

In FIG. 10, the horizontal axis represents the above proportion S_{S}/S, and the vertical axis represents the pressure loss. In Table 3 and FIG. 10, the proportion Ss/S is a sum of the above proportions S_{<20}/S and S₂₀₋₄₀/S. Also, in Table 3, the proportion S_{M+L}/S is a sum of the above proportions S₄₀₋₆₀/S, S₆₀₋₈₀/S, S₈₀₋₁₀₀/S, and S_{100<}/S.

As shown in Table 3 and FIG. 10, the proportion S_{S}/S of the exhaust gas-purifying catalyst according to Example 1 was larger than that of the exhaust gas-purifying catalysts according to Comparative Examples 1 to 3, and the pressure loss of the exhaust gas-purifying catalyst according to Example 1 after PM accumulation was smaller than that of the exhaust gas-purifying catalysts according to Comparative Examples 1 to 3.

### <6> Production of Exhaust gas-purifying Catalyst

### (Example 2)

An exhaust gas-purifying catalyst was produced by the same method as described Example 1, except that the ratio of the amount of the catalyst layer to the volume of the filter substrate was changed from 75 g/L to 50 g/L.

### (Example 3)

An exhaust gas-purifying catalyst was produced by the same method as described in Example 1, except that the ratio of the amount of the catalyst layer to the volume of the filter substrate was changed from 75 g/L to 100 g/L.

### (Example 4)

An exhaust gas-purifying catalyst was produced by the same method as described in Example 1, except that the ratio of the amount of the catalyst layer to the volume of the filter substrate was changed from 75 g/L to 125 g/L.

### (Example 5)

An exhaust gas-purifying catalyst was produced by the same method as described in Example 1, except that the amount of the inorganic particles with respect to the volume of the filter substrate was changed from 5 g/L to 20 g/L.

### (Comparative Example 4)

An exhaust gas-purifying catalyst was produced by the same method as described in Example 1, except that the amount of the inorganic particles with respect to the volume of the filter substrate was changed from 5 g/L to 1 g/L.

### <7> Influence of Amount of Catalyst Layer on Opening Diameter

The opening diameters on the first cell-side surface of the porous wall of the exhaust gas-purifying catalysts according to Examples 2 to 4 were measured by the same method as described above. The results are shown in Table 4 and FIG. 11.

**TABLE 4**

| | Amount (g/L) | | S_{<20}/S (%) | S₂₀₋₄₀/S (%) | S₄₀₋₆₀/S (%) | S₆₀₋₈₀/S (%) | S₈₀₋₁₀₀/S (%) | S_{100<}/S (%) |
|---|---|---|---|---|---|---|---|---|
| | Catalyst layer | Inorganic particles | | | | | | |
| Ex.1 | 75 | 5 | 43.4 | 38.4 | 13.6 | 4.6 | 0 | 0 |
| Ex. 2 | 50 | 5 | 43.5 | 34 | 15.5 | 7 | 0 | 0 |
| Ex. 3 | 100 | 5 | 44.9 | 35.5 | 14.6 | 5 | 0 | 0 |
| Ex. 4 | 125 | 5 | 42.4 | 35.4 | 17 | 5.2 | 0 | 0 |

As shown in Table 4, when the amount of the catalyst layer was sufficiently large, the proportion of the pores having a large opening diameter on the first cell-side surface of the porous wall was successfully reduced by producing an exhaust gas-purifying catalyst by the above-described method. However, when the amount of the catalyst layer was increased, the total area S of all the pores was decreased. Specifically, the total areas S of all the pores obtained in the exhaust gas-purifying catalysts according to Examples 2, 3, and 4 were respectively over 1.3 times, over 0.7 times, and less than 0.4 times the total area S of all the pores obtained in the exhaust gas-purifying catalyst according to Example 1.

### <8> Influence of Amount of Inorganic Particles on Opening Diameter

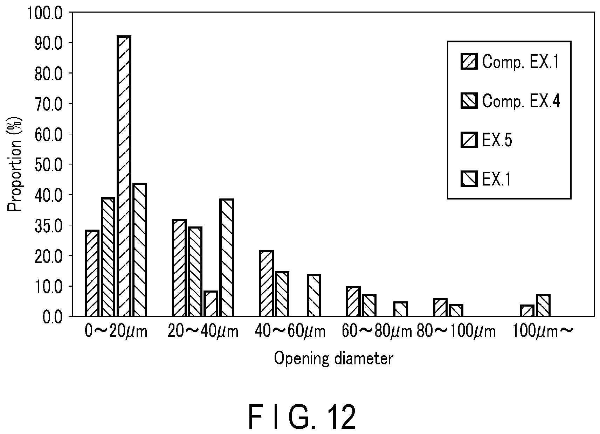

The opening diameters on the first cell-side surface of the porous wall of the exhaust gas-purifying catalysts according to Example 5 and Comparative Example 4 were measured by the same method as described above. The results are shown in Table 5 and FIG. 12.

**TABLE 5**

| | Amount (g/L) | | S_{<20}/S (%) | S₂₀₋₄₀/S (%) | S₄₀₋₆₀/S (%) | S₆₀₋₈₀/S (%) | S₈₀₋₁₀₀/S (%) | S_{100<}/S (%) |
|---|---|---|---|---|---|---|---|---|
| | Catalyst layer | Inorganic particles | | | | | | |
| Ex. 1 | 75 | 5 | 43.4 | 38.4 | 13.6 | 4.6 | 0 | 0 |
| Ex. 5 | 75 | 20 | 91.9 | 8.1 | 0 | 0 | 0 | 0 |
| Comp. Ex. 1 | 75 | 0 | 28.1 | 31.7 | 21.6 | 9.6 | 5.6 | 3.5 |
| Comp. Ex. 4 | 75 | 1 | 38.7 | 29.2 | 14.4 | 7 | 3.6 | 7 |

As shown in Table 5, when the amount of the inorganic particles was increased, the proportion of the pores having a large opening diameter on the first cell-side surface of the porous wall was decreased.

### <9> Measurement of Filling Rate

The filling rates R_{F1}, R_{F2}, and R_{F3} of the exhaust gas-purifying catalysts according to Examples 1 to 5 and Comparative Examples 1 to 4 were obtained by the method described with reference to FIG. 4. As an example, the result obtained for the exhaust gas-purifying catalyst according to Example 3 is shown in Table 6 below.

**TABLE 6**

| | R_{F1} (%) | R_{F2} (%) | R_{F3} (%) |
|---|---|---|---|
| Ex. 3 | 30.7 | 33.8 | 43.1 |

In all of the exhaust gas-purifying catalysts according to Examples 1 to 5 and Comparative Examples 1 to 4, the filling rates R_{F1}, R_{F2}, and R_{F3} satisfied the relationship represented by the inequality R_{F1} < R_{F2} < R_{F3}, the filling rate R_{F1} was in the range of 10% to 40%, the filling rate R_{F2} was in the range of 15% to 40%, and the filling rate R_{F3} was in the range of 20% to 45%. Reference Signs List
1. Exhaust gas-purifying catalyst
2. Catalyst-coated filter
3. Inorganic particle
21. Filter substrate
21W. Filter wall
22. Catalyst layer
211. Honeycomb structure
211W. Wall
212a. Plug
212b. Plug
B1. Boundary
B2. Boundary
C1. First cell
C2. Second cell
CV1. Space portion
CV2. Space portion
CL. Broken line
E1. First end
E2. Second end
IC1. Circle
IC2. Circle
IC3. Circle
IC4a. Circle
IC4b. Circle
P1. Pore
P2. Pore
P4. Pore
W. Porous wall

## Claims

1. An exhaust gas-purifying catalyst comprising a catalyst-coated filter, the catalyst-coated filter comprising a filter substrate and a catalyst layer on a pore wall of the filter substrate, wherein
the exhaust gas-purifying catalyst has a first end, a second end, a porous wall, a first cell, and a second cell, the first cell extending from the first end toward the second end, being opened at the first end, and being closed at the second end, the second cell extending from the second end toward the first end, being opened at the second end, and being closed at the first end, and the first cell and the second cell being adjacent to each other with the porous wall interposed therebetween, and
the porous wall has a proportion Ss/S of 65% or more at a surface on the first cell side, the proportion S_{S}/S being a proportion of a total area Ss of pores having an opening diameter of less than 40 µm at the surface in a total area S of all pores at the surface.

2. The exhaust gas-purifying catalyst according to claim 1, wherein the porous wall has a proportion S_{M}/S of 30% or less at the surface, the proportion S_{M}/S being a proportion of a total area S_{M} of pores having an opening diameter of 40 µm or more and less than 60 um at the surface in the total area S of all the pores.

3. The exhaust gas-purifying catalyst according to claim 1 or 2, wherein the porous wall has a proportion S_{L}/S of 15% or less at the surface, the proportion S_{L}/S being a proportion of a total area S_{L} of pores having an opening diameter of 60 µm or more at the surface in the total area S of all the pores.

4. The exhaust gas-purifying catalyst according to any one of claims 1 to 3, wherein the porous wall has a proportion S_{SS}/S of 50% or less at the surface, the proportion Sss/S being a proportion of a total area Sss of pores having an opening diameter of less than 20 µm at the surface in the total area S of all the pores.

5. The exhaust gas-purifying catalyst according to any one of claims 1 to 4, wherein a portion of the porous wall on the first cell side has a cross section perpendicular to the surface, pores of the filter substrate include first pores having a pore diameter of 5 µm or more and less than 10 µm at the cross section, second pores having a pore diameter of 10 um or more and less than 20 um at the cross section, and third pores having a pore diameter of 20 um or more at the cross section, a filling rate R_{F1} of the first pores with the catalyst layer, a filling rate R_{F2} of the second pores with the catalyst layer, and a filling rate R_{F3} of the third pores with the catalyst layer satisfy a relationship represented by an inequality R_{F1} < R_{F2} < R_{F3}.

6. The exhaust gas-purifying catalyst according to claim 5, wherein the filling rate R_{F1} is 40% or less, the filling rate R_{F2} is 40% or less, and the filling rate R_{F3} is 45% or less.

7. The exhaust gas-purifying catalyst according to claim 5 or 6, wherein the filling rate R_{F3} is 20% or more.

8. The exhaust gas-purifying catalyst according to any one of claims 1 to 7, wherein a ratio of a mass of the catalyst layer to a volume of the filter substrate is in a range of 10 g/L to 300 g/L.

9. The exhaust gas-purifying catalyst according to any one of claims 1 to 8, further comprising inorganic particles in a powder form supported by the catalyst-coated filter.

10. The exhaust gas-purifying catalyst according to claim 9, wherein the inorganic particles are localized on the first cell side of the porous wall.

11. The exhaust gas-purifying catalyst according to claim 9, wherein an amount A, an amount A1, and an amount A2 satisfy a relationship represented by an inequality (A1+A2)/A ≥ 900, the amount A being a total amount of the inorganic particles, the amount A1 being an amount of the inorganic particles positioned above a surface of the catalyst-coated filter on the first cell side, and the amount A2 being an amount of the inorganic particles which are in pores of the catalyst-coated filter and whose distances from the surface of the catalyst-coated filter on the first cell side is 20% or less of a thickness of a portion of the catalyst-coated filter corresponding to the porous wall.

12. The exhaust gas-purifying catalyst according to any one of claims 9 to 11, wherein the pores of the porous wall include first small pores having an opening diameter of less than 40 um at the surface and first large pores having an opening diameter of 40 um or more at the surface, and pores of a portion of the catalyst-coated filter corresponding to the porous wall include second small pores having an opening diameter of less than 40 µm at a surface of the portion on the first cell side and second large pores having an opening diameter of 40 um or more at the surface of the portion, a ratio (S_{S2}-S_{S1})/S_{S2} of a difference S_{S2}-S_{S1} between a total area S_{S2} of the second small pores and a total area S_{S1} of the first small pores to the total area S_{S2} of the second small pores is 40% or less, and a ratio (S_{L2}-S_{L1})/S_{L2} of a difference S_{L2}-S_{L1} between a total area S_{L2} of the second large pores and a total area S_{L1} of the first large pores to the total area S_{L2} of the second large pores is 600 or more.

13. The exhaust gas-purifying catalyst according to any one of claims 9 to 12, wherein the inorganic particles have an average particle size in a range of 1 µm to 50 µm.

14. The exhaust gas-purifying catalyst according to any one of claims 9 to 13, wherein the inorganic particles comprise one or more selected from the group consisting of a metal oxide, a metal hydroxide, a metal carbonate, a metal phosphate, a metal nitrate, a metal sulfate, and a clay mineral.

15. The exhaust gas-purifying catalyst according to any one of claims 9 to 14, wherein a ratio of a mass of the inorganic particles to a volume of the filter substrate is in a range of 3 g/L to 50 g/L.
